# EUROPEAN PATENT APPLICATION

(11) **EP 1 901 382 A2**
(43) Date of publication of application: **19.03.2008**
(21) Application number: 07016580.8
(22) Date of filing: 23.08.2007
(51) Int. Cl.: H01M 8/04

(54) **Fuel cell system with hydrogen supply pipe connecting structure**

(30) Priority: 29.08.2006 JP 2006231574; 16.10.2006 JP 2006280952
(71) Applicant: Yamaha Hatsudoki Kabushiki Kaisha, Iwata-shi, Shizuoka 438-8501 (JP)
(72) Inventor: Kurosawa, Atsushi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a fuel cell system having a fuel cell (25) for generating electric power by reacting hydrogen gas with oxygen gas, said hydrogen gas being supplied from a hydrogen tank (31) through a hydrogen supply pipe, said hydrogen supply pipe being constituted by a hydrogen tank side pipe (31a) and a fuel cell side pipe (31b), said pipes (31a,31b) being connected by a coupler mechanism (32), said coupler mechanism (32) being constituted by a hydrogen tank side coupler (32b) and fuel cell side coupler (32a), being detachably connected with each other, wherein an electric or electronic component (41a,41b,41c) is disposed on the hydrogen tank side and a control device (50) is provided on the fuel cell side, and wherein the control device (50) and the electronic component (41a,41b,41c) are connected to each other by connecting the coupler (32a,32b) with each other.

## Description

The present invention relates to a fuel cell system with a hydrogen supply pipe connecting structure, which is provided in a system having a fuel cell for generating electric power by reacting hydrogen gas with oxygen gas.

Conventionally, there have been systems, vehicles, and the like, which have a fuel cell for generating electric power by reacting hydrogen gas with oxygen gas in order to run with the electric power generated by the fuel cell. In one of these fuel cell systems, two hydrogen supply pipes, respectively joined to a fuel cell and a hydrogen tank for reserving hydrogen gas, are connected to each other through a detachable connecting section (see Patent Document 1, for example).

The connecting section of the system is constituted by a valve body and a metal bush fitting. The valve body has a screw provided on an inner circumferential surface on its connection port side. Within the valve body, a valve element is disposed such that it is urged by a spring on a valve seat on the connection port side to close a flow path. On an outer circumference of a distal end of the metal bush fitting, a screw engageable with the valve body screw is provided. The screw is engaged with the valve body screw to connect the valve body and the metal bush fitting, so that the distal end of the metal bush fitting moves the valve element rearward to communicate the valve body with the metal bush fitting.

### Patent Document 1: JP-A-Hei 10-064567

However, in the conventional fuel cell system, a hydrogen tank need be replaceable when the remaining amount of hydrogen gas decreases. In addition, in case such fuel cell system has an electronic component, such as solenoid opening-closing valve, mounted on a part of the hydrogen supply pipe on the hydrogen tank side, replacement of a high-pressure hydrogen tank involves attachment/detachment of the connecting section, as well as attachment/detachment of an electric wire for connecting between the electronic component and a controller for controlling operation of the electronic component. This disadvantageously makes a replacement work of the hydrogen tank cumbersome.

The present invention is made in view of solving the foregoing problem, and an object of the invention is to provide a fuel cell system with a hydrogen supply pipe connecting structure to facilitate attachment/detachment of a hydrogen supply pipe for connecting a fuel cell and a hydrogen tank having an electronic component mounted nearby.

This objective is solved in an inventive manner by a fuel cell system having a fuel cell for generating electric power by reacting hydrogen gas with oxygen gas, said hydrogen gas being supplied from a hydrogen tank through a hydrogen supply pipe, said hydrogen supply pipe being constituted by a hydrogen tank side pipe and a fuel cell side pipe, said pipes being connected by a coupler mechanism, said coupler mechanism being constituted by a hydrogen tank side coupler and fuel cell side coupler, being detachably connected with each other, wherein an electric or electronic component is disposed on the hydrogen tank side and a control device is provided on the fuel cell side, and wherein the control device and the electronic component are connected to each other by connecting the coupler with each other.

Preferably, the electric or electronic component and the control device are electrically connected to or disconnected from each other in accordance with attachment/detachment of a pair of couplers including the hydrogen tank side coupler and the fuel cell side coupler.

According to a preferred embodiment the fuel cell system further comprises a first electric connection for connecting the electric or electronic component to the hydrogen tank side coupler, said electric or electronic component being disposed on the hydrogen tank side pipe and/or the hydrogen tank.

According to another preferred embodiment, the fuel cell system further comprises a second electric connection for connecting the control device with the fuel cell side coupler.

Preferably, the electronic component disposed on the hydrogen tank side pipe or the hydrogen tank is connected to the hydrogen tank side coupler through an electronic component side electric wire and the control device for controlling the electronic component is connected to the fuel cell side coupler through a control device side electric wire.

Further, preferably at least one of the pair of couplers, including the hydrogen tank side coupler and the fuel cell side coupler, is provided with a mechanism for closing a hydrogen supply path of the at least one of the pair of couplers by using a resilient member to urge a valve element toward a valve seat.

Still further, preferably, at least the other one of the pair of couplers, including the hydrogen tank side coupler and the fuel cell side coupler, is provided with a pressing section for communicating the hydrogen supply path of the hydrogen tank side coupler and the hydrogen supply path of the fuel cell side coupler with each other by moving the valve element rearward against an urging force of the resilient member.

Preferably, an electric or electronic component side terminal, coupled to an end of the electric or electronic component side electric wire, is fixed to a given portion of the hydrogen tank side coupler, while a control device side terminal is fixed to a given portion of the fuel cell side coupler, the control device side terminal being electrically connected to the electric or electronic component side terminal after the hydrogen tank side coupler and the fuel cell side coupler are connected in an airtight manner in a process of connecting the hydrogen tank side coupler and the fuel cell side coupler, and an end of the control device side electric wire is coupled to the control device side terminal.

Further, preferably the pressing section is constituted by a tube member for communicating the hydrogen supply path of the hydrogen tank side coupler with the hydrogen supply path of the fuel cell side coupler in an airtight manner; one of the pair of couplers, including the hydrogen tank side coupler and the fuel cell side coupler, is provided with the mechanism for closing the hydrogen supply path of the one of the pair of couplers by using the resilient member to urge the valve element toward the valve seat, while the other one of the pair of couplers, including the hydrogen tank side coupler and the fuel cell side coupler, is provided with the pressing section; and the pressing section moves the valve element rearward against an urging force of the resilient member, thereby communicating the hydrogen supply path of the hydrogen tank side coupler with the hydrogen supply path of the fuel cell side coupler in an airtight manner.

Still further, preferably the pressing section is constituted by a tubular communicating section for communicating the hydrogen supply path of the hydrogen tank side coupler with the hydrogen supply path of the fuel cell side coupler in an airtight manner and a pressing rod that can be inserted into the communicating section; the pair of couplers, including the hydrogen tank side coupler and the fuel cell side coupler, are both provided with the mechanism for closing the hydrogen supply path of each coupler by using the resilient member to urge the valve element toward the valve seat; either one of the pair of couplers is provided with the communicating section and the either one of the pair of couplers is provided with the pressing rod; and the communicating section and the pressing rod move the oppositely facing valve elements rearward against an urging force of each resilient member, thereby communicating the hydrogen supply path of the hydrogen tank side coupler with the hydrogen supply path of the fuel cell side coupler in an airtight manner.

Yet further still, preferably in order to disconnect the hydrogen tank side coupler and the fuel cell side coupler from each other, the electronic component side terminal and the control device side terminal are moved away from each other, and then the hydrogen tank side coupler and the fuel cell side coupler, which have been connected in an airtight manner, are disconnected from each other.

Preferably when the electronic component and the control device are electrically connected, the connection between the hydrogen tank side coupler and the fuel cell side coupler the determined to be completed.

Further, preferably a protruding piece for covering a certain portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electronic component side terminal and the control device side terminal is fixed to an inner surface of the protruding piece, while the other one of the electronic component side terminal and the control device side terminal is fixed to the certain portion of the one of the pair of the couplers.

Still further, preferably an opposed section which faces a distal end portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the control device side terminal and the control device side terminal is fixed to the opposed section, while the other one of the electronic component side terminal and the control device side terminal is fixed to the distal end portion of the one of the pair of the couplers.

Yet further still, preferably when connecting the hydrogen tank side coupler and the fuel cell side coupler, the electronic component side terminal and the control device side terminal are frictionally contacted with each other, bringing the terminals into electrical connection.

Preferably, the electronic component is at least one of a solenoid valve for opening or closing the hydrogen tank side pipe, a hydrogen remaining amount detecting sensor for detecting a remaining amount of hydrogen in the hydrogen tank, and a temperature sensor for detecting the temperature of the hydrogen tank.

Further, preferably the system having the fuel cell is a motorcycle.

In the following, the present invention is explained in greater detail with respect to several embodiments thereof in conjunction with the accompanying drawings, wherein:
- FIG. 1: is a side view illustrating a motorcycle having a hydrogen supply pipe connecting structure according to the first embodiment,
- FIG. 2: is a configuration diagram of a fuel cell system,
- FIG. 3: is a sectional view illustrating that a female coupler and a male coupler are disconnected from each other,
- FIG. 4: is a sectional view illustrating that the female coupler and the male coupler are to be connected to each other,
- FIG. 5: is a sectional view illustrating that the female coupler and the male coupler are connected to each other,
- FIG. 6: is a sectional view illustrating that a female coupler and a male coupler, which are provided in a hydrogen supply pipe connecting structure according to the second embodiment, are disconnected from each other,
- FIG. 7: is a sectional view illustrating that the female coupler and the male coupler shown in FIG. 6 are to be connected to each other,
- FIG. 8: is a sectional view illustrating that the female coupler and the male coupler shown in FIG. 6 are connected to each other,
- FIG. 9: is a front view of the female coupler shown in FIG. 6,
- FIG. 10: is a front view of the male coupler shown in FIG. 6,

- FIG. 11: is a sectional view illustrating that a female coupler and a male coupler, which are provided in a hydrogen supply pipe connecting structure according to the third embodiment, are disconnected from each other,
- FIG. 12: is a sectional view illustrating that the female coupler and the male coupler shown in FIG. 11 are to be connected to each other,
- FIG. 13: is a sectional view illustrating that the female coupler and the male coupler shown in FIG. 11 are connected to each other,
- FIG. 14: is a sectional view illustrating that a female coupler and a male coupler, which are provided in a hydrogen supply pipe connecting structure according to the fourth embodiment, are disconnected from each other,
- FIG. 15: is a sectional view illustrating that the female coupler and the male coupler shown in FIG. 14 are approaching each other,
- FIG. 16: is a sectional view illustrating that the female coupler and the male coupler shown in FIG. 14 have approached each other, and
- FIG. 17: is a sectional view illustrating that the female coupler and the male coupler shown in FIG. 14 are connected to each other.

### Description of Reference Numerals and Symbols:

10: motorcycle
25: fuel cell
31 a, 31b:gas pipe
31: hydrogen tank
32, 72, 82, 92: detachable coupler
32a, 72a, 82a, 92a:female coupler
32b, 72b, 82b, 92b:male coupler
33c:valve seat
34a. 85a:valve element
34b, 85b:coil spring
37a, 37b, 77a, 77b, 97:terminal
39, 79, 89, 99: communicating section
41a : solenoid valve
41 b:hydrogen remaining amount detecting sensor
41 c:temperature sensor
50: power source system control device
54a, 54b, 55a, 55b, 56a, 56b:electric wire
86: pressing rod
a, b: hydrogen supply path

### (First Embodiment)

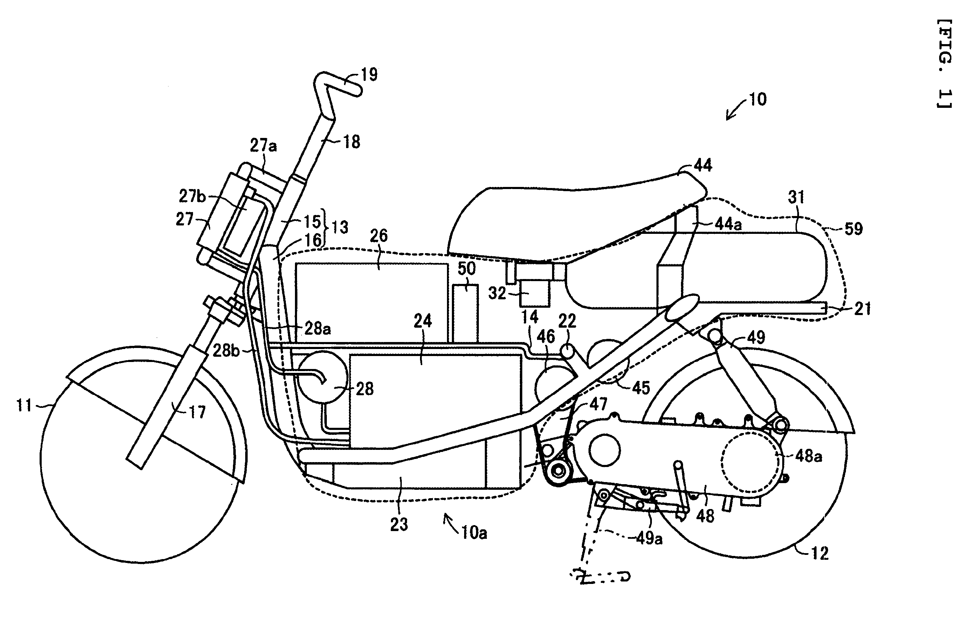

Detail description is hereinafter made of a hydrogen supply pipe connecting structure according to the first embodiment with reference to the drawings. FIG. 1 shows a motorcycle 10 having the hydrogen supply pipe connecting structure according to the first embodiment. The motorcycle 10 has a pair of wheels including a front wheel 11 and a rear wheel 12, and a vehicle body 10a, to which the paired wheels are attached. The vehicle body 10a has a body frame 13 forming a main part of the vehicle body 10a and a sub-frame 14 removably attached to the body frame 13. The body frame 13 has a head pipe 15 forming a front part of the vehicle body 10a and a main frame 16 extending backward from the head pipe 15.

The front wheel 11 is rotatably supported at the lower end of a front fork 17 having a two-forked lower portion. More specifically, a bearing (not shown) extends across the lower end portions of the front fork 17 to support an axle of the front wheel 11. This allows the front wheel 11 to rotate about the axle through the bearing. The lower end of a steering shaft 18 placed in a head pipe 15 is connected to the upper end of the front fork 17. The steering shaft 18 is attached in the head pipe 15 for rotation about the axis of the head pipe 15, and has an upper end protruding from the head pipe 15 and extending upward.

The upper end of the steering shaft 18 is connected to the center of a pair of handlebars 19 disposed generally horizontally. Therefore, when the pair of handlebars 19 are rotated to rotate the steering shaft 18 about its axis, the front wheel 11 turns to the right or left about the axis of the front fork 17 in proportion to the amount of rotation of the steering shaft 18. Grips (not shown) are provided at both ends of the pair of handlebars 19.

One of the grips is provided for rotation about its axis, and constitutes an accelerator operation element for controlling the drive power of a drive motor 48a, which is described later, in addition to being used as a grip portion which is held by a hand. The other grip is fixed to the handlebar 19 and used as a grip portion which is held by a hand. Brake levers (not shown), which are urged away from the grips and cause the rotation of the front wheel 11 or the rear wheel 12 to slow down when pulled toward the grips, are disposed in the vicinity of the grips.

The main frame 16 has a pair of curved frames (only one of which is shown), the front ends (upper ends) of which are connected to both sides of a lower part of the head pipe 15. The main frames 16 extend backward and obliquely downward from the joints with the head pipe 15 with the distance between them increasing, and then are curved and extend horizontally backward. In addition, the main frames 16 have rear end portions extending backward and obliquely upward with the distance between them kept constant. The rear ends of the main frames 16 are connected to a plate-shaped mounting member 21 disposed horizontally.

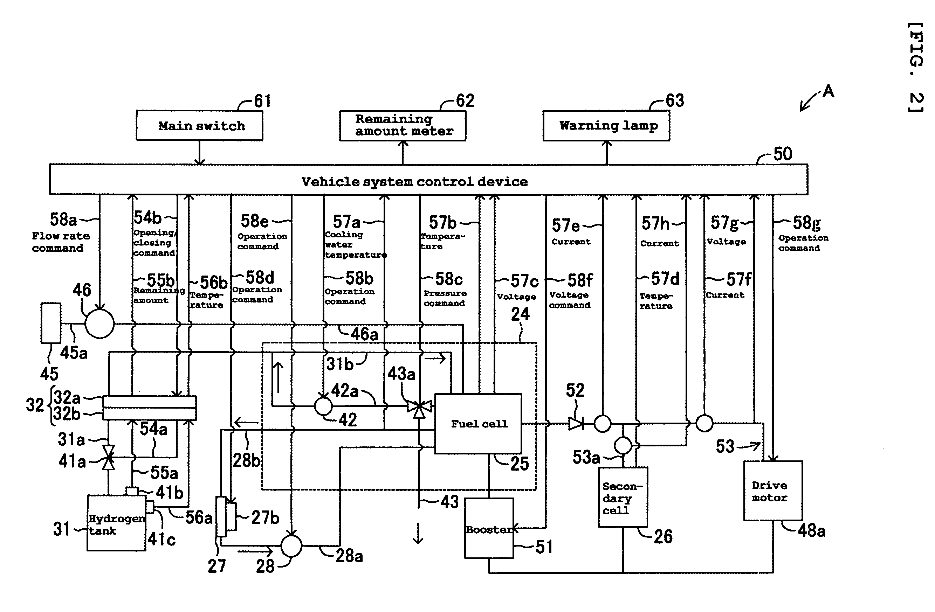

A cross member 22 extends across upper sides of rear parts of the main frames 16. The cross member 22 is formed in a generally U-shaped rod with both ends bent generally at a right angle, and has a main portion protruding upward from the main frames 16 with the bent ends connected to the main frames 16. A mount table 23 protruding downward between the main frames 16 extends across the lower ends of the main frames 16. The upper side of the mount table 23 is recessed to form therein an accommodating section 24. A fuel cell 25 (see FIG. 2) is accommodated in the accommodating section 24.

A plate-like sub-frame 14 is attached between a front part of the main frames 16 and the cross member 22 disposed on rear parts of the main frames 16. A lithium ion battery as a secondary battery 26 is fixed to a part of the upper surface of the sub-frame 14 on slightly front side from the center thereof, and a power source system control device 50 for controlling the devices, which a fuel cell system A shown in FIG. 2 has, is fixed on a rear part of the upper surface the sub-frame 14.

A radiator 27 is attached to a front part of the head pipe 15 via a fixing member 27a, and a fan 27b for air-cooling the radiator 27 is attached behind the radiator 27 (between the radiator 27 and the head pipe 15). A water pump 28 is attached to a front part of the main frame 16 in front of the accommodating section 24 and below the sub-frame 14 (secondary battery 26). A cooling water pipe 28a connects between the radiator 27 and the fuel cell 25. The water pump 28 is provided on the cooling water pipe 28a.

That is, the cooling water pipe 28a extends from the radiator 27 to the water pump 28 and then from the water pump 28 to the accommodating section 24, extends into the accommodating section 24 through a front side thereof, and is connected to the fuel cell 25. A cooling water pipe 28b connects between the fuel cell 25 and the radiator 27. Through the cooling water pipe 28b, cooling water, which has cooled the fuel cell 25, flows from the fuel cell 25 toward the radiator 27. Therefore, when the water pump 28 is activated, the cooling water in the radiator 27 is fed to the fuel cell 25 through the cooling water pipe 28a to cool the fuel cell 25. Then, the cooling water which has cooled the fuel cell 25 and absorbed heat therefrom is returned to the radiator 27 through the cooling water pipe 28b and cooled by the fan 27b while passing through the radiator 27.

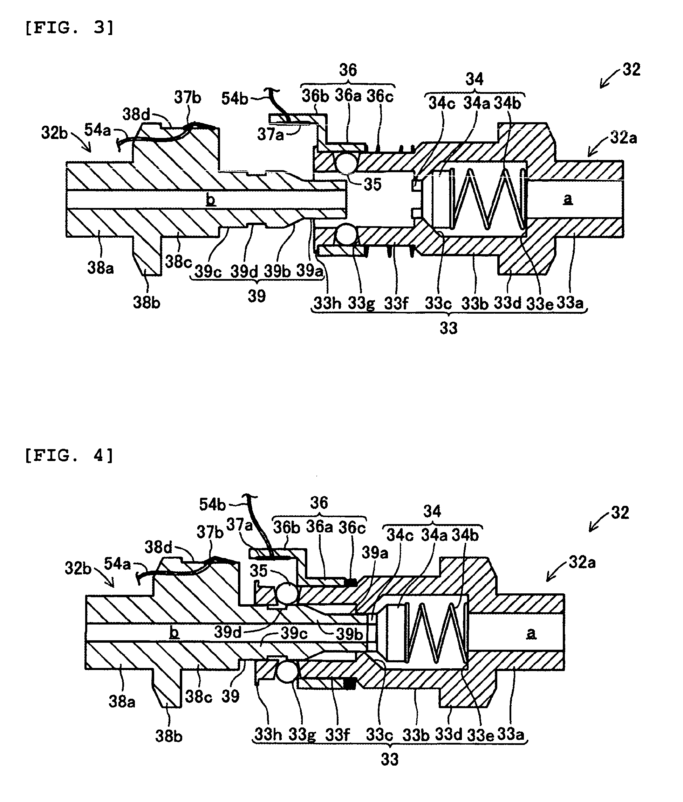

A hydrogen tank 31 filled with hydrogen to be supplied to the fuel cell 25 is attached to the upper side of the mounting member 21 connected to the rear ends of the main frame 16. As shown in FIG. 2, the hydrogen tank 31 is connected to a hydrogen gas supply port of the fuel cell 25 through a gas pipe 31 a as a hydrogen tank side pipe of the present teaching, a detachable coupler 32, and a gas pipe 31 b as a fuel cell side pipe of the present teaching. As shown in FIGs. 3 to 5, the detachable coupler 32 includes a female coupler 32a as a fuel cell side coupler of the teaching, and a male coupler 32b as a hydrogen tank side coupler of the teaching, which is detachable from the female coupler 32a.

The female coupler 32a has a main body 33 with its interior formed as a hydrogen supply path (a), a valve member 34 contained in the main body 33, as well as a spherical engaging member 35 and an attachment/detachment operation section 36 both for attaching/detaching the female coupler 32a to/from the male coupler 32b. The main body 33 is generally shaped into a stepped cylinder, including axially extending portions of predetermined different diameters. A proximal end portion of the main body 33 (right part in FIG. 3) is constituted by a joint part 33a of a relatively small diameter, which is joined to an end portion of the gas pipe 31 b. A center portion of the main body 33 in the axial direction is constituted by an accommodating part 33b of a relatively large diameter. A tapered valve seat 33c is formed on an inner circumferential surface of the accommodating part 33b at a distal end portion thereof, the valve seat 33c having an inner diameter smaller toward the distal side. A flange-shaped gripping part 33d is formed on an outer circumference at a boarder area between the joint part 33a and the accommodating part 33b. A stepped part 33e is formed on an inner circumferential surface of the gripping part 33d.

The distal end portion of the main body 33 is constituted by an engaging part 33f for engaging with the male coupler 32b. The engaging part 33f is formed into a cylinder including portions of a diameter relatively smaller than the diameter of the accommodating part 33b and of a diameter relatively larger than the diameter of the joint part 33a. At the distal side portion of the engaging part 33f, plural holes 33g are circumferentially provided at equal intervals. Each hole 33g extends through from the inner surface to the outer surface of the engaging part 33f. The hole 33g (internal space) is formed into a truncated conical shape with its inner diameter on the outer surface of the engaging part 33f larger than its inner diameter on the inner surface thereof. The valve member 34 is placed within the accommodating part 33b. The spherical engaging member 35 is placed in each hole 33g.

The valve member 34 is constituted by a valve element 34a and a coil spring 34b as a resilient elastic member of the teaching. The valve element 34a is shaped into a thick disk with its front end portion tapered to be contactable to the valve seat 33c in the accommodating part 33b in an airtight manner. The coil spring 34b is fixed to the rear end plane of the valve element 34a. Plural projections 34c are formed circumferentially at equal intervals on a front plane of the valve body 34, the front plane having a relatively small diameter. An outer diameter defined by all the projections 34c is set slightly smaller than an inner diameter of an aperture of the valve seat 33c, such that the projections 34c are inserted through the aperture of the valve seat 33c.

The valve member 34 thus configured allows the stepped part 33e inside the accommodating part 33b to support the rear end portion of the coil spring 34b. The valve member 34 is placed within the accommodating part 33b with the valve element 34a urged toward the valve seat 33c by resilience of the coil spring 34b. Therefore, as shown in FIG. 3, when the female coupler 32a and the male coupler 32b are not connected to each other, the front plane of the valve element 34a is pressed on and fitted to the valve seat 33c with the projections 34c inserted through the aperture of the valve seat 33c. Thereby, the hydrogen supply path (a) of the female coupler 32a is kept closed.

The spherical engaging member 35 is accommodated movably within the hole 33g. A diameter of the spherical engaging member 35 is set slightly larger than a thickness of the engaging part 33f (axial length of the hole 33g). When the spherical engaging member 35 is located on the outermost side of the hole 33g, one end portion of the spherical engaging member 35 protrudes from the inner side of the engaging part 33f, and the other end portion of the spherical engaging member 35 is located in position to correspond with the outer circumferential surface of the engaging part 33f. The attachment/detachment operation section 36 is fitted to the outer circumferential surface of the engaging part 33f. The attachment/detachment operation section 36 is constituted by a cylindrical detachable part 36a, an operation lever 36b provided at the distal end portion of the detachable part 36a as a protruding piece of the teaching, and a coil spring 36c.

The detachable part 36a is movable along the outer circumferential surface of the engaging part 33f. When the detachable part 36a is located on the distal side of the engaging part 33f, the detachable part 36a abuts on the spherical engaging member 35 and positions it to the outermost side of the hole 33g. The spherical engaging member 35 is then secured by the inner circumferential surfaces of the hole 33g and the detachable part 36a. When the detachable part 36a is located on the proximal side of the engaging part 33f, that is, the detachable part 36a is located closer to the proximal side of the engaging part 33f than the spherical engaging member 35, so that the spherical engaging member 35 is movable within the hole 33g.

When the detachable part 36a is located on the proximal side of the engaging part 33f, in the event the spherical engaging member 35 is to protrude outward from the hole 33g, the inner circumferential distal end portion of the detachable part 36a abuts on the rearward (proximal side) part of the protruding spherical engaging member 35 to prevent the spherical engaging member 35 from leaving out of the hole 33g. The end portion of the spherical engaging member 35 on the inner side of the engaging part 33f is located in position to correspond with the inner circumferential surface of the engaging part 33f. The coil spring 36c is placed on the outer circumferential surface of the engaging part 33f to urge the detachable part 36a forward, with its top end portion in contact with a rear end plane of the detachable part 36a, and its rear end portion positioned at the step formed on the boarder area between the accommodating part 33b and the engaging part 33f.

A flange-shaped stopper 33h is formed at an edge of the engaging part 33f on its outer circumferential surface to retain the detachable part 36a. The stopper 33h prevents the detachable part 36a from leaving out of the engaging part 33f. The operation lever 36b is constituted by an L-shaped piece circumferentially extending from the edge of the detachable part 36a, and then bending forward. A terminal 37a as a control device side terminal of the teaching is fixed to an inner surface of the forward extending portion of the operation lever 36b. The terminal 37a is formed into a rectangular shape with its longitudinal side longer relative to its lateral side. The terminal 37a is mounted along the inner surface of the operation lever 36b with its front end and rear end fixed to the operation lever 36b. Although FIGs. 3 to 5 only show a one piece of terminal 37a, the terminal 37a is actually constituted by four pieces, which are arranged side by side.

The male coupler 32b is generally shaped into a stepped cylinder, including axially extending portions of predetermined different diameters. The interior of the male coupler 32b is formed into a hydrogen supply path (b). A proximal end portion of the male coupler 32b (left part in FIG. 3) is constituted by a joint part 38a of a large diameter (approximately as large as the diameter of the joint part 33a of the female coupler 32a), which is joined to an end portion of the gas pipe 31 a. A distal end portion of the male coupler 32b is constituted by a communicating section 39 as a pressing section of the teaching, which is engaged with the engaging part 33f of the female coupler 32a to communicate the hydrogen supply path (a) of the female coupler 32a with the hydrogen supply path (b) of the male coupler 32b. For the sake of convenience for explanation, the right side of the female coupler 32a, shown in FIGs. 3 to 5, is referred to as proximal side or rearward side, while the left side of the female coupler 32a is referred to as distal side or forward side. In contrast, the left side of the male coupler 32b, shown in FIGs. 3 to 5, is referred to as proximal side or rearward side, while the right side of the male coupler 32b is referred to as distal side or forward side.

The communicating section 39 is constituted by a small-diameter distal end part 39a, which can be inserted into the accommodating part 33b in slidably contact with a peripheral edge of the aperture of the valve seat 33c, a tapered part 39b whose outer diameter increases from the rear end portion of the small-diameter distal end part 39a to the rearward side, and a large-diameter rear end part 39c, which is formed on the rearward side of the tapered part 39b and can be inserted into the engaging part 33f in slidably contact with the inner circumferential surface thereof. At an approximately axial center of the large-diameter rear end part 39c, a shallow engaging groove 39d is formed circumferentially.

The engaging groove 39d is formed in position to face the hole 33g of the engaging part 33f, when the female coupler 32a and the male coupler 32b are connected to each other in an airtight manner. The engaging groove 39d has dimensions to accommodate, together with the hole 33g, the spherical engaging member 35. In other words, the sum of the depth of the hole 33g (thickness of the engaging part 33f) and the depth of the engaging groove 39d is set approximately equal to the diameter of the spherical engaging member 35. In addition, a flange-shaped gripping part 38b is formed on the forward side of the joint part 38a of the male coupler 32b. A main body 38c, which is approximately as thick as the joint part 38a, is formed between the gripping part 38b and the joint section 39.

A projection 38d is formed on a portion of the main body 38c, which corresponds to the operation lever 36b of the attachment/detachment operation section 36. When the female coupler 32a and the male coupler 32b are connected to each other, the projection 38d is in the vicinity of and opposed to the inner surface of the operation lever 36b. A terminal 37b as an electronic component side terminal of the teaching is fixed to the outer surface of the projection 38d. The terminal 37b is formed into a rectangular shape with its longitudinal side longer relative to its lateral side. The terminal 37b is mounted with its front end and rear end fixed to the projection 38d and its bent center portion protruding outward. The terminal 37b is constituted by four pieces, which are arranged side by side at the intervals corresponding to those for the four terminals 37a. The gas pipes 31 a and 31 b are connected detachably through the detachable coupler 32 thus configured.

The gas pipe 31 a is provided with an opening-closing solenoid valve 41 a. The hydrogen tank 31 is provided with a hydrogen remaining amount detecting sensor 41b and a temperature sensor 41 c. The solenoid valve 41 a, the hydrogen remaining amount detecting sensor 41 b, and the temperature sensor 41 c form an electronic component of the teaching. A hydrogen gas discharge port of the fuel cell 25 is connected to the gas pipe 31 b through a gas pipe 42a. A circulation pump 42 for returning unreacted hydrogen gas, discharged from the hydrogen gas discharge port of the fuel cell 25, to the gas pipe 31 b is provided in the gas pipe 42a.

A gas purge pipe 43 for discharging gas out of the gas pipe 42a is connected to a portion of the gas pipe 42a on the fuel cell 25 side through a three-way valve 43a. Therefore, while the female coupler 32a and the male coupler 32b are connected to each other, opening the solenoid valve 41 a allows hydrogen gas in the hydrogen tank 31 to be supplied to the fuel cell 25 through the gas pipes 31 a and 31 b.

When the circulation pump 42 is activated in the connecting state, unreacted hydrogen gas remaining in the fuel cell 25 can be returned to the gas pipe 31 b through the gas pipe 42a and joined to hydrogen gas newly fed from the hydrogen tank 31 into the gas pipe 31 b. Then, the hydrogen gas is circulated in the gas pipes 31b and 42a before being reacted with oxygen gas in the fuel cell 25. In addition, when the gas and the remaining water in the gas pipe 42a and the fuel cell 25 are discharged, the three-way valve 43a is switched to communicate the upstream side portion of the gas pipe 42a with the gas purge pipe 43.

A seat 44 is disposed above a front part of the hydrogen tank 31. The seat 44 is connected to rear parts of the main frames 16a via support members 44a. An air filter 45 is mounted at the rear of the cross member 22 on the rear parts of the main frames 16. An air blower 46 as an air supply device of the teaching is mounted in front of the cross member 22 on the rear parts of the main flames 16. A mount table (not shown) is provided between rear parts of the main frames 16, and the air filter 45 and the air blower 46 are fixed to the main frames 16 via the mount table.

The gas pipes 45a and 46a as an air supply pipe of the teaching respectively connect the air filter 45 and the air blower 46 to each other and the air blower 46 and the fuel cell 25 to each other. Thus, when the air blower 46 is activated, outside air is sucked through the air filter 45 and delivered to the fuel cell 25. Dust in the air sucked into the air filter 45 is removed, while the air passes through the air filter 45. When passing through the fuel cell 25, the air, excluding oxygen gas that has reacted with hydrogen gas to generate electric power by the fuel cell 25, is discharged externally.

A rear arm (not shown) having a pair of arm members extending backward is connected to lower rear parts of the main frames 16 via a connection member 47. Both ends of the axle of the rear wheel 12 are rotatably supported at the rear ends of the arm members of the rear arm to allow rotation of the rear wheel 12 about the axle. A motor unit 48 is attached to the outside of one of the arm members of the rear arm in such a manner as to cover the arm member.

A drive motor 48a, which is operated on electric power generated by the fuel cell 25, and a reduction mechanism are housed in the motor unit 48. The rear wheel 12 is rotated by the operation of the drive motor 48a, and the motorcycle 10 runs. Rear cushions 49 extend between the rear ends of the main frames 16 and the upper rear ends of the rear arm. The expansion and contraction of the rear cushions 49 allows swinging movement of the rear end of the rear arm. A drum brake (not shown) is attached on the side of the inner side the motor unit 48.

The drive motor 48a is operated by control of the power source system control device 50 in accordance with the amount by which the grip is operated and automatically generates drive power in the rear wheel 12. The motorcycle 10 has a rotary stand 49a for keeping the motorcycle 10 in an upright state when it is in a stationary state. The stand 49a is moved to its upper position as shown by solid lines in FIG. 1 when the motorcycle 10 runs, and moved to its lower position as shown by double-dot dash lines in FIG. 1 so that the stand 49a can support the motorcycle 10 when the motorcycle 10 is held stationary.

In addition, the fuel cell system A has a booster 51 for raising the voltage of the electric power generated by the fuel cell 25 and a backflow-preventing diode 52. An electric circuit 53 is constituted of the fuel cell 25, the secondary battery 26, the drive motor 48a, the booster 51, the diode 52, and electric wires connecting them. The devices, forming the fuel cell system A, are provided with respective sensors (not shown) for detecting various conditions of the devices, in addition to the hydrogen remaining amount detecting sensor 41 b for detecting the remaining amount of hydrogen in the hydrogen tank 31 and the temperature sensor 41 c for detecting the temperature of the hydrogen tank 31. These sensors and the respective devices, such as the solenoid valve 41 a, are connected to the power source system control device 50 through each electric wire.

To be more specific, the solenoid valve 41 a is connected to the terminal 37b of the male coupler 32b through an electric wire 54a as an electrical component side wire of the teaching. The terminal 37a of the male coupler 32a and the power source system control device 50 are connected through the electric wire 54b as a control device side wire of the teaching. Thus, connecting the female coupler 32a and the male coupler 32b to each other allows the solenoid valve 41 a to be electrically connected to the power source system control device 50, and therefore to be operable under the control of the power source system control device 50.

Similarly, the hydrogen remaining amount detecting sensor 41 b is electrically connectable to the power source system control device 50 through an electric wire 55a for connecting the hydrogen remaining amount detecting sensor 41 b and the terminal 37b provided on the male coupler 32b and through an electric wire 55b for connecting the terminal 37a provided on the female coupler 32a and the power source system control device 50. Also, the temperature sensor 41 c is electrically connectable to the power source system control device 50 through an electric wire 56a for connecting the temperature sensor 41 c and the terminal 37b provided on the male coupler 32b and through an electric wire 56b for connecting the terminal 37a provided on the female coupler 32a and the power source system control device 50. The hydrogen remaining amount detecting sensor 41 b and the temperature sensor 41 c transmit electrical signals of their respective detected values to the power source system control device 50.

The cooling water pipe 28b is provided with a temperature sensor for detecting the temperature of the cooling water, which is fed from the radiator 27 to the fuel cell 25 to cool it and then fed from the fuel cell 25 back to the radiator 27. The fuel cell 25 is provided with a temperature sensor for detecting the temperature of the fuel cell 25 and a voltage sensor for detecting the voltage value in the fuel cell 25, and the secondary battery 26 is provided with a temperature sensor for detecting the temperature of the secondary battery 26.

The electric circuit 53 is provided with a current sensor for detecting a value of the current flowing through the electric circuit 53, as well as with a current sensor and a voltage sensor respectively for detecting values of the current and voltage flowing through the drive motor 48a. Further, an electric wire 53a connected to the secondary battery 26 in the electric circuit 53 is provided with a current sensor for detecting the value of current flowing to the secondary battery 26. These sensors are connected to the power source system control device 50 through respective electric wires 57a, 57b, 57c, 57d, 57e, 57f, 57g, and 57h to transmit electric signals of the detected values to the power source system control device 50.

Electric wires 58a, 58b, 58c, 58d, 58e, 58f and 58g, which are for transmitting a command signal from the power source system control device 50 to the air blower 46, the circulation pump 42, the three-way valve 43a, the fan 27b, the water pump 28, the booster 51 and the drive motor 48a, respectively, connect the power source system control device 50 and the corresponding devices. The air blower 46 is activated in response to a flow rate command signal from the power source system control device 50 to supply air to the fuel cell 25. The solenoid valve 41 a is opened or closed in response to an opening/closing command signal from the power source system control device 50 to supply hydrogen gas from the hydrogen tank 31 to the fuel cell 25.

The fuel cell 25 generates water and electricity through a reaction between oxygen in the air supplied from the air blower 46 and hydrogen supplied from the hydrogen tank 31. At that time, the circulation pump 42 is activated in response to an operation command signal from the power source system control device 50 and returns hydrogen gas, which has not reacted with oxygen gas in the fuel cell 25, to the gas pipe 31 b through the gas pipe 42a to join it to hydrogen gas newly fed from the hydrogen tank 31 into the gas pipe 31 b. The three-way valve 43a communicates the upstream side of the gas pipe 42a with the downstream side thereof or with the gas purge pipe 43 in response to a switching command signal from the power source system control device 50.

The water pump 28 is activated in response to an operation command signal from the power source system control device 50 and circulates cooling water between the radiator 27 and the fuel cell 25 to maintain the temperature of the fuel cell 25 at a prescribed temperature. The fan 27b is activated in response to an operation command signal from the power source system control device 50 to air-cool the radiator 27. The booster 51 raises the voltage of the electricity generated by the fuel cell 25 in response to a voltage command signal from the power source system control device 50, and supplies the electricity to the drive motor 48a and to the secondary battery 26 to charge the secondary battery 26. The drive motor 48a receives an operation signal corresponding to the amount, by which the grip constituting an accelerator operation element is operated, from the power source system control device 50, and is activated in response to the operation signal.

The power source system control device 50 has a CPU, a RAM, a ROM, a timer, and so on. Various programs and data, such as a map, prepared in advance are stored in the ROM. The CPU controls the drive motor 48a, the solenoid valve 41a, the three-way valve 43a, the air blower 46, the water pump 28, and so on based on the driver's operation by the grip or based on the programs prepared in advance. In addition, the motorcycle 10 has a main switch 61, a remaining amount meter 62 for displaying a detected value of the hydrogen remaining amount detecting sensor 41 b, and a warning lamp 63 for alerting in the event of an abnormal condition occurring to the respective devices provided in the fuel cell system A. An external surface of the vehicle body 10a of the motorcycle 10 is covered with a cover member 59, so that the internal devices are not visible.

In this configuration, when mounting a hydrogen tank 31 filled with hydrogen gas on the motorcycle 10, a part of the cover member 59, which covers the hydrogen tank 31, is opened to place the hydrogen tank 31 on the mounting member 21. Then, the hydrogen tank 31 is fixed to the mounting member 21 with a given fixing member, and then the female coupler 32a and the male coupler 32b are connected to each other. In such case, the female coupler 32a and the male coupler 32b face each other, as shown in FIG. 3, and after that, the female coupler 32a and the male coupler 32b approach each other in order to insert the communicating section 39 of the male coupler 32b into the engaging part 33f of the female coupler 32a.

When the tapered part 39b of the communicating section 39 abuts on the spherical engaging member 35, the operation lever 36b of the female coupler 32a is moved rearward against the resilience of the coil spring 36c so that the detachable part 36a is located closer to the proximal end side of the female coupler 32a than the spherical engaging member 35. This enables the spherical engaging member 35 to move within the hole 33g, under which condition, the female coupler 32a and the male coupler 32b further approach each other, so that the spherical engaging member 35 passes over the tapered part 39b and is located on the outer circumferential surface of the large-diameter rear end part 39c. At this moment, as shown in FIG. 4, the small-diameter distal end part 39a of the communicating section 39 presses and moves the valve element 34a rearward against the resilience of the coil spring 34b.

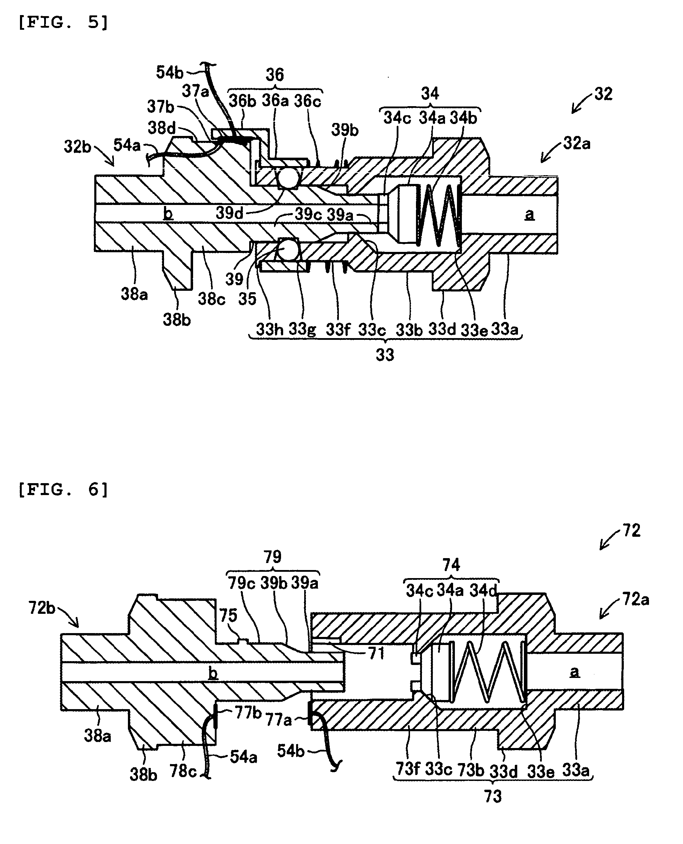

In such case, the outer circumferential surface of the small-diameter distal end part 39a contacts the peripheral edge of the aperture of the valve seat 33c in an airtight manner, and the hydrogen supply path (a) of the female coupler 32a and the hydrogen supply path (b) of the male coupler 32b are communicated with each other through gaps between the plural projections 34c provided on the front plane of the valve element 34a. Then, the female coupler 32a and the male coupler 32b further approach each other. When the hole 33g and the engaging groove 39d overlap one another, a force pressing the operation lever 36b is released. Thereby, the detachable part 36a is pressed back to the front by the resilience of the coil spring 36c, as shown in FIG. 5. In this condition, the spherical engaging member 35 is secured by the hole 33g, the detachable part 36a, and the engaging groove 39d, maintaining the connection between the female coupler 32a and the male coupler 32b through the spherical engaging member 35.

In addition, the small-diameter distal end part 39a and the valve seat 33c are kept airtight, while the female coupler 32a and the male coupler 32b are held in communication with each other. Further, when the force pressing the operation lever 36b is released, causing the detachable part 36a to move forward, the terminals 37a and 37b overlap with their surfaces frictionally contacted with each other, bringing them into electrical connection. Thereby, the electric wires 54a and 54b connect to each other to enables the solenoid valve 41a to activate. Respectively connecting the electric wires 55a and 55b to each other and the electric wires 56a and 56b to each other allows the hydrogen remaining amount detecting sensor 41 b and the temperature sensor 41 c to both start activation. Under this condition, the cover member 59 is closed.

First, the main switch 61 is turned on to drive the motorcycle 10. Then, air and hydrogen are supplied to the fuel cell 25 from air blower 46 and the hydrogen tank 31, respectively, and the fuel cell 25 generates electricity through a reaction between oxygen in the supplied air and the hydrogen. Under this condition, operating the grip or the handlebars 19 allows the motorcycle 10 to run at a given speed in a given direction.

In case the hydrogen tank 31 is replaced when no hydrogen gas remains in the hydrogen tank 31, the aforementioned process for connecting the female coupler 32a and the male coupler 32b is performed in the reverse order. More specifically, while the operation lever 36b is moved rearward from the position shown in FIG. 5 in order to enable the spherical engaging member 35 to move, the terminals 37a and 37b are disconnected from each other. Then, the female coupler 32a and the male coupler 32b are moved away from each other. After the small-diameter distal end part 39a of the communicating section 39 is removed from the valve seat 33c, the valve element 34a is pressed on the valve seat 33c due to the resiliency of the coil spring 34b, closing the hydrogen supply path of the female coupler 32a. Upon this condition, the driver releases the hand from the operation lever 36b.

As described above, in the hydrogen supply pipe connecting structure according to the first embodiment, when the female coupler 32a and the male coupler 32b are connected to each other to communicate the gas pipes 31 a and 31 b with each other, the electric wires 54a and 54b are connected, allowing the solenoid valve 41 a to activate. At the same time, respectively connecting the electric wires 55a and 55b to each other and the electric wires 56a and 56b to each other allows the hydrogen remaining amount detecting sensor 41 b and the temperature sensor 41 c to both start activating. This eliminates the necessity of an operation for connecting the electric wire 54a and so forth, facilitating the connecting operations. In addition, the electric wires 54a and 54b are connected to each other after the female coupler 32a and the male coupler 32b are connected to each other in an airtight manner. Therefore, unless the female coupler 32a and the male coupler 32b are connected to each other in an airtight manner, the solenoid valve 41 a cannot operate so that no hydrogen gas is discharged from the hydrogen tank 31.

In order to connect the female coupler 32a and the male coupler 32b, the terminals 37a and 37b overlap with their surfaces frictionally contacted with each other, bringing them into electrical connection. Thus, in the event dust adheres to or an oxide film is formed on the surfaces of the terminals 37a and 37b, frictionally contacting the surfaces of the terminals 37a and 37b with each other results in removal of the dust or the oxide film. Thereby, the contact between the terminal 37a and the terminals 37b can be maintained in good condition.

In addition, when the female coupler 32a and the male coupler 32b are connected to each other, the remaining amount meter 62 displays their connection. Therefore, the display allows the driver to confirm that the female coupler 32a and the male coupler 32b have been connected already. In the aforementioned embodiment, the detachable coupler 32 is provided with four sets of terminals, including the four terminals 37a and the four terminals 37b. Three of these sets of terminals are used for connecting the solenoid valve 41 a, the hydrogen remaining amount detecting sensor 41 b, and the temperature sensor 41 c respectively to the power source system control device 50. The other one set of terminals are used as grounding terminals.

### (Second Embodiment)

FIGs. 6 to 8 show a hydrogen supply pipe connecting structure according to a second embodiment. In the hydrogen supply pipe connecting structure, a detachable coupler 72 includes a female coupler 72a and a male coupler 72b, as shown in FIGs. 6 to 8. The female coupler 72a includes a main body 73 and a valve member 74 contained in the main body 73. The main body 73 includes an accommodating part 73b and an engaging part 73f formed at its center portion and distal end portion in the axial direction, respectively. The accommodating part 73b and the engaging part 73f have a cylindrical shape with an equal outer diameter.

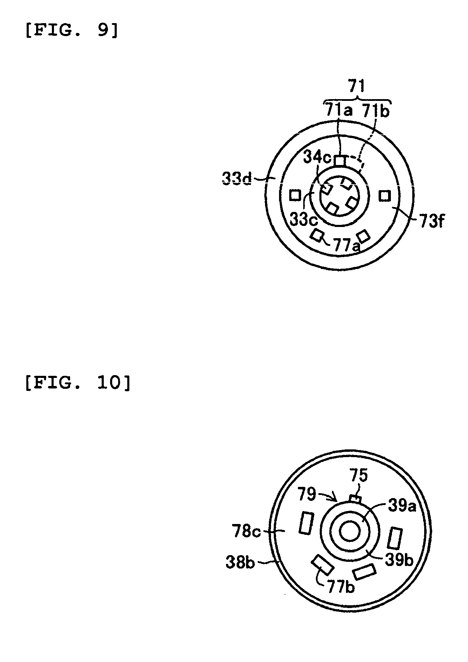

No through hole is formed on a circumferential surface of the engaging part 73f, but an engaging groove 71 is provided on an inner surface of the engaging part 73f at its distal side portion. As shown in FIG. 9, the engaging groove 71 includes a guide part 71 a extending rearward from the distal end of the engaging part 73f in the axial direction, and an engaging part 71 b bent from the rearmost end of the guide part 71 a to extend circumferentially, the guide part 71 a and the engaging part 71 b forming an L-shape. Four terminals 77a as a control device side terminal of the teaching are fixed to a front end plane of the engaging part 73f at given intervals.

No engaging groove is provided, but an engaging projection 75 is provided on a large-diameter rear end part 79c of the communicating section 79 of the male coupler 72b. The engaging projection 75 is engageable with the engaging groove 71 of the female coupler 72a. The engaging projection 75 is inserted into the guide part 71a of the engaging groove 71. When the engaging projection 75 reaches the rearmost end of the guide part 71 a, the female coupler 72a and the male coupler 72b are rotated relative to each other in the axial direction. This allows the engaging projection 75 to be engaged with the engaging part 71 b, thereby maintaining the connection between the female coupler 72a and the male coupler 72b. The main body 78c of the male coupler 72b is formed into an approximately cylinder shape having a large outer diameter.

As shown in FIG. 10, four terminals 77b as an electronic component side terminal of the teaching are fixed to a plane of the main body 78c, the plane facing the four terminals 77a of the female coupler 72a (the plane forming an opposed section of the invention), at intervals corresponding to those for the terminals 77a. The terminals 77b are mounted in position such that they are electrically connected to the terminals 77a when the engaging projection 75 is engaged with the engaging part 71 b of the engaging groove 71. In the hydrogen supply pipe connecting structure, components, other than those mentioned above, are the same as the components in the hydrogen supply pipe connecting structure according to the aforementioned first embodiment. It is thus understood that the similar components are attached with the same reference numerals and no repeated description will be made.

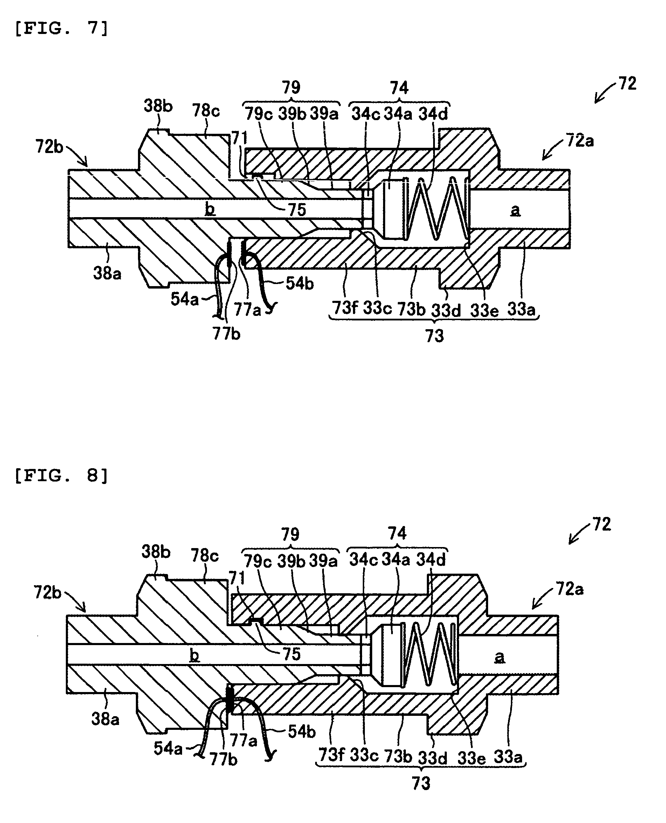

In order to connect the female coupler 72a and the male coupler 72b, the female coupler 72a and the male coupler 72b, which face each other as shown in FIG. 6, approach each other, and then the communicating section 79 of the male coupler 72b is inserted into the engaging part 73f of the female coupler 72a, as shown in FIG. 7. Then, the female coupler 72a and the male coupler 72b further approach each other with the engaging projection 75 inserted into the guide part 71a of the engaging groove 71. When the engaging projection 75 reaches the rearmost end of the guide part 71a, the female coupler 72a and the male coupler 72b are rotated relative to each other in the axial direction. Thereby, the engaging projection 75 is engaged with the engaging part 71 b of the engaging groove 71, maintaining the connection between the female coupler 72a and the male coupler 72b, as shown in FIG. 8.

In such case, the outer circumferential surface of the small-diameter distal end part 39a contacts the peripheral edge of the aperture of the valve seat 33c in an airtight manner, and the hydrogen supply path (a) of the female coupler 72a and the hydrogen supply path (b) of the male coupler 72b are communicated with each other through the gaps between the plural projections 34c provided on the front plane of the valve element 34a. When the female coupler 72a and the male coupler 72b are rotated relative to each other in the axial direction, the terminals 77a and 77b are electrically connected with their surfaces frictionally contacted with each other. The functions and effects of the hydrogen supply pipe connecting structure, other than those mentioned above, are the same as in the hydrogen supply pipe connecting structure according to the aforementioned first embodiment.

### (Third Embodiment)

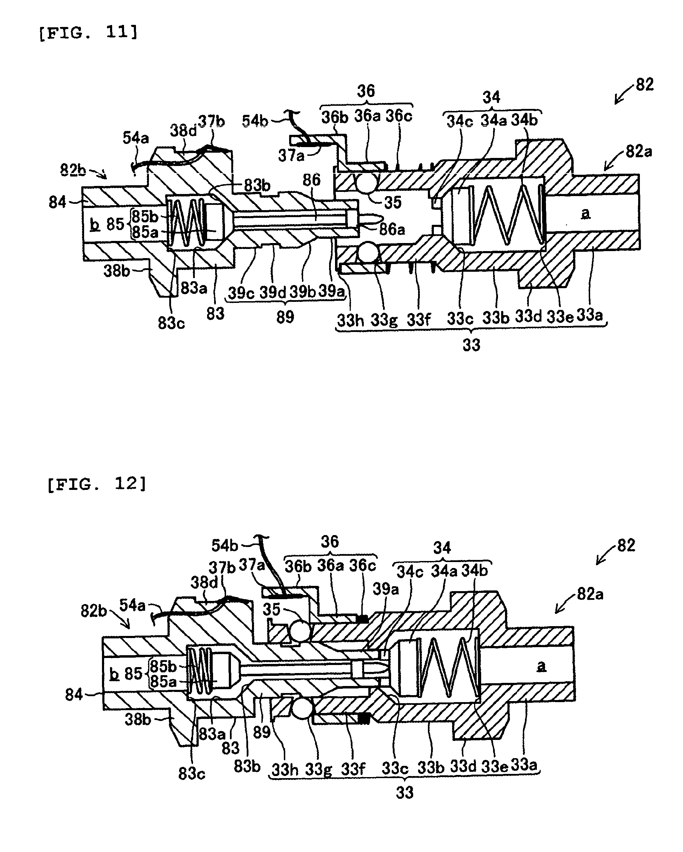

FIGs. 11 to 13 show a hydrogen supply pipe connecting structure according to a third embodiment. In the hydrogen supply pipe connecting structure, a detachable coupler 82 includes a female coupler 82a and a male coupler 82b, as shown in FIGs. 11 to 13. A main body 83, located on the center portion of the male coupler 82b, is formed into an approximately cylindrical shape, and has an interior as an accommodating part 83a that forms a large-diameter hydrogen supply path. A tapered valve seat 83b is formed on an inner circumferential surface of the accommodating part 83a at its distal side portion, such that an inner diameter of the tapered valve seat 83b decreases toward the distal side. A stepped part 83c is formed on the inner circumferential surface of the accommodating part 83a at its proximal side portion, such that an inner diameter of the stepped part 83c is smaller on its proximal end than on its distal side. A inner circumferential diameter of the joint section 84 that forms the proximal end portion of the male coupler 82b is set as same as the inner circumferential diameter of the accommodating part 83a on its smaller-diameter side.

In the accommodating part 83a, a valve member 85 is placed. The valve member 85 is constituted by a valve element 85a and a coil spring 85b as an resilient member of the teaching. The valve element 85a is shaped into a thick disk with its front end portion tapered to be contactable to the valve seat 83c in the accommodating part 83b in an airtight manner. The coil spring 85b is fixed to the rear end plane of the valve element 85a. The valve member 85 thus configured allows the stepped part 83c inside the accommodating part 83a to support the rear end portion of the coil spring 85b. The valve member 85 is placed within the accommodating part 83a with the valve element 85a urged toward the valve seat 83b by resilience of the coil spring 85b.

A pressing rod 86 extends forward from the front plane of the valve body 85a at its center portion, the front plane having a relatively small diameter. The pressing rod 86 is formed into a rod member, which can be inserted through the interior of the communicating section 89 provided on the distal end side of the male coupler 82b. A length of the pressing rod 86 is longer than the axial length of the communicating section 89. A flange-shaped guide part 86a is provided circumferentially at the distal side portion of the pressing rod 86, such that the guide part 86a slidably contacts the inner circumferential surface of the communicating section 89. The guide part 86a is provided such that it is positioned at the distal end portion of the communicating section 89 (shown in FIG. 11) when the valve element 85a contacts the valve seat 83b.

In the hydrogen supply pipe connecting structure, the communicating section 89 and the pressing rod 86 form a pressing section of the teaching. In the hydrogen supply pipe connecting structure, components, other than those mentioned above, are the same as the components in the hydrogen supply pipe connecting structure according to the aforementioned first embodiment. It is thus understood that the similar components are attached with the same reference numerals and no repeated description will be made. A resilient force of the coil spring 85b is set slightly smaller than the resilient force of the coil spring 34b.

In this structure, to connect the female coupler 82a and the male coupler 82b, the female coupler 82a and the male coupler 82b, which face each other as shown in FIG. 11, approach each other, and then the communicating section 89 of the male coupler 82b is inserted into the engaging part 33f of the female coupler 82a, as shown in FIG. 12. Then, the operation lever 36b of the female coupler 82a is moved rearward to position the detachable part 36a closer to the proximal side of the female coupler 82a than the spherical engaging member 35. Under this condition, the tapered part 39b of the communicating section 89 is contacted with the spherical engaging member 35.

Under this condition, the female coupler 82a and the male coupler 82b further approach each other, which moves the spherical engaging member 35 past the tapered part 39b onto the outer circumferential surface of the large-diameter rear end part 39c. Thereby, the distal end portion of the pressing rod 86 abuts on the distal plane of the valve element 34a. The coil spring 85b is compressed, and then the distal end portion of the pressing rod 86 is moved rearward within the communicating section 89. When the female coupler 82a and the male coupler 82b further approach each other, the small-diameter distal end part 39a of the communicating section 89 abuts on the projections 34c and presses the valve element 34a against the resiliency of the coil spring 34b to move rearward, as shown in FIG. 12.

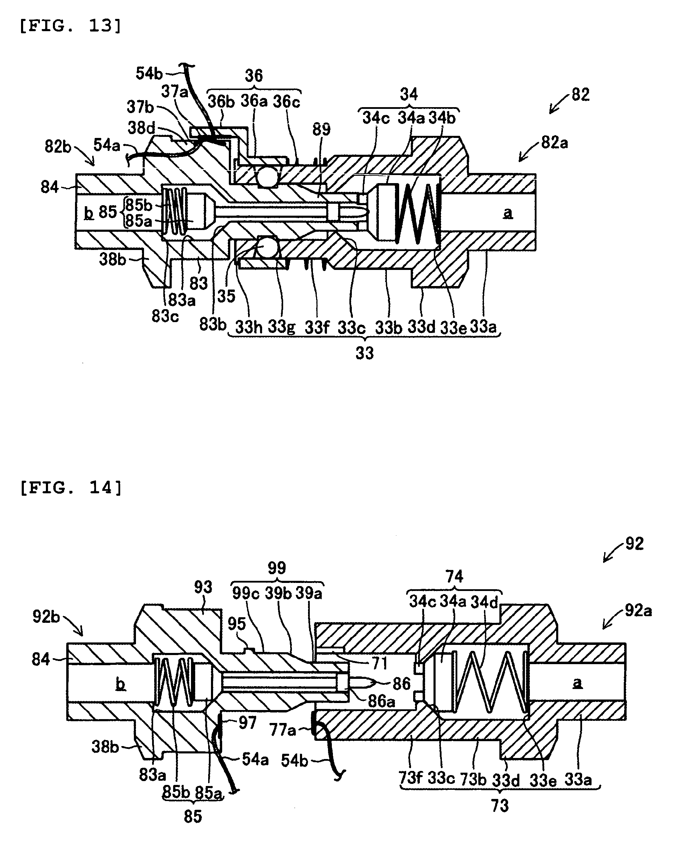

Then, the female coupler 82a and the male coupler 82b still further approach each other. When the hole 33g and the engaging groove 39d overlap one another, a force pressing the operation lever 36b is released. Thereby, the detachable part 36a is pressed back to the front by the resilience of the coil spring 36c, as shown in FIG. 13. In this condition, the spherical engaging member 35 is secured by the hole 33g, the detachable part 36a, and the engaging groove 39d, maintaining the connection between the female coupler 82a and the male coupler 82b through the spherical engaging member 35.

In such case, the outer circumferential surface of the small-diameter distal end part 39a contacts the peripheral edge of the aperture of the valve seat 33c in an airtight manner, and the hydrogen supply path (a) of the female coupler 82a and the hydrogen supply path (b) of the male coupler 82b are communicated with each other through the gaps between the plural projections 34c provided on the front plane of the valve element 34a. Further, when the force pressing the operation lever 36b is released, causing the detachable part 36a to move forward, the terminals 37a and 37b overlap with their surfaces frictionally contacted with each other, bringing them into electrical connection. Thereby, the electric wires 54a and 54b connect to each other to enables the solenoid valve 41 a to activate. The functions and effects of the hydrogen supply pipe connecting structure, other than those mentioned above, are the same as in the hydrogen supply pipe connecting structure according to the aforementioned first embodiment.

### (Fourth Embodiment)

FIGs. 14 to 17 show a hydrogen supply pipe connecting structure according to a fourth embodiment. In the hydrogen supply pipe connecting structure, a detachable coupler 92 includes a female coupler 92a and a male coupler 92b, as shown in FIGs. 14 to 17. The female coupler 92a is the same in structure as the female coupler 72a according to the aforementioned second embodiment of the invention. Therefore, components of the female coupler 92a identical to those of the female coupler 72a shown in FIGs. 6 to 8 are denoted by the same reference numerals, and description thereof will not be repeated.

No engaging groove is provided, but an engaging projection 95 is provided on a large-diameter rear end part 99c of a communicating section 99 of the male coupler 92b. The engaging projection 95 is engageable with the engaging groove 71 of the female coupler 92a. A main body 93 of the male coupler 92b is formed into an approximately cylinder shape having a large outer diameter. Four terminals 97 are fixed to a plane of the main body 93, the plane facing the four terminals 77a of the female coupler 92a, at the intervals corresponding to those for the terminals 77a. Components of the male coupler 92b, other than those mentioned above, are the same as the components of the male coupler 82b according to the aforementioned third embodiment. Therefore, components of the male coupler 92b identical to those of the male coupler 82b shown in FIGs. 11 to 13 are denoted by the same reference numerals, and description thereof will not be repeated.

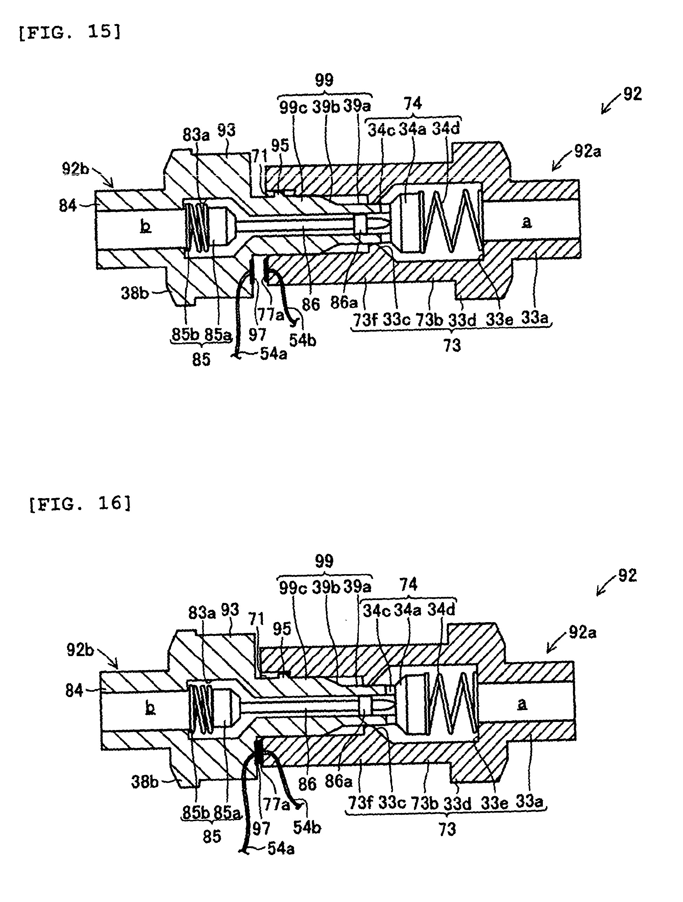

In this structure, to connect the female coupler 92a and the male coupler 92b, the female coupler 92a and the male coupler 92b, which face each other as shown in FIG. 14, approach each other, and then the communicating section 99 of the male coupler 92b is inserted into the engaging part 73f of the female coupler 92a, as shown in FIG. 15. When the female coupler 92a and the male coupler 92b further approach each other with the engaging projection 95 inserted into the guide part 71 a of the engaging groove 71, the distal end portion of the pressing rod 86 abuts on the valve element 34a, compressing the coil spring 85b. This allows the distal end portion of the pressing rod 86 to move rearward within the communicating section 99.

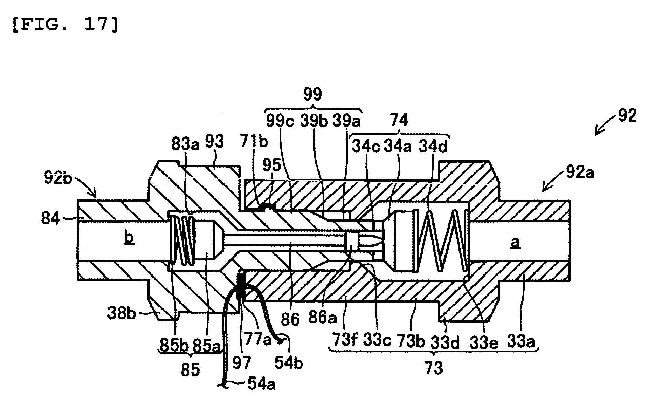

When the female coupler 92a and the male coupler 92b still further approach each other, the small-diameter distal end part 39a of the communicating section 99 abuts on the projections 34c and presses the valve element 34a against the resiliency of the coil spring 34b to move rearward, as shown in FIG. 15. When the female coupler 92a and the male coupler 92b still further approach each other, and the engaging projection 95 reaches the rearmost end of the guide part 71 a as shown in FIG. 16, the female coupler 92a and the male coupler 92b are rotated relative to each other in the axial direction. Thereby, the engaging projection 95 is engaged with the engaging part 71 b of the engaging groove 71, maintaining the connection between the female coupler 92a and the male coupler 92b, as shown in FIG. 17.

In such case, the outer circumferential surface of the small-diameter distal end part 39a contacts the peripheral edge of the aperture of the valve seat 33c in an airtight manner, and the hydrogen supply path (a) of the female coupler 92a and the hydrogen supply path (b) of the male coupler 92b are communicated with each other through the gaps between the plural projections 34c provided on the front plane of the valve element 34a. When the female coupler 92a and the male coupler 92b are rotated relative to each other in the axial direction, the terminals 77a and 97 are electrically connected with their surfaces frictionally contacted with each other. The functions and effects of the hydrogen supply pipe connecting structure, other than those mentioned above, are the same as in the hydrogen supply pipe connecting structure according to the aforementioned embodiments.

The hydrogen supply pipe connecting structure according to the present teaching is not limited to the embodiments described above and may be modified as needed. For example, in the aforementioned embodiments of the present teaching, the solenoid valve 41 a, the hydrogen remaining amount detecting sensor 41 b, and the temperature sensor 41 c are provided as an electronic component of the teaching. Alternatively, any one or two of them may form an electromagnetic component. In the aforementioned embodiments of the teaching, the female coupler 32a and so forth are connected to the gas pipe 31 b, while the male coupler 32b and so forth are connected to the gas pipe 31 a. Alternatively, the female coupler 32a and so forth may be connected to the gas pipe 31a, while the male coupler 32b and so forth may be connected to the gas pipe 31 b.

Further, in the aforementioned third and fourth embodiments of the teaching, the pressing rod 86 is provided at the center portion of the front plane of the valve element 85a. Alternatively, the pressing rod 86 may be provided at the center portion of the front plane of the valve element 34a. In addition, although the hydrogen supply pipe connecting structure is applied to the motorcycle in the embodiments described above, the system which uses the hydrogen supply pipe connecting structure is not limited to the motorcycle and may be a vehicle such as a three-wheeled motor vehicle or four-wheeled motor vehicle or a system which uses electric power other than vehicles. The components of the hydrogen supply pipe connecting structure according to the teaching may be modified as needed within the technical scope of the teaching.

The description above discloses (amongst others) in order to achieve the foregoing object, a hydrogen supply pipe connecting structure according to the present embodiment used for a system having a fuel cell for generating electric power by reacting hydrogen gas, which is supplied from a hydrogen tank through a hydrogen supply pipe, with oxygen gas, which is supplied from an air supply device through an air supply pipe, in which the hydrogen supply pipe is constituted by a hydrogen tank side pipe and a fuel cell side pipe to provide a hydrogen tank side coupler on a distal end portion of the hydrogen tank side pipe and to provide a fuel cell side coupler, detachably connected to the hydrogen tank side coupler, on a distal end portion of the fuel cell side pipe; an electronic component is disposed on the hydrogen tank side pipe or the hydrogen tank to connect the electronic component to the hydrogen tank side coupler through an electronic component side electric wire and to connect a control device for controlling the electronic component to the fuel cell side coupler through a control device side electric wire; and the electronic component and the control device are electrically connected to or disconnected from each other in accordance with attachment/detachment of a pair of couplers including the hydrogen tank side coupler and the fuel cell side coupler.

In the hydrogen supply pipe connecting structure according to this embodiment, the hydrogen supply pipe is constituted by the hydrogen tank side pipe, connected to the hydrogen tank, and the fuel cell side pipe, connected to the fuel cell, which the hydrogen tank side coupler is provided on the hydrogen tank side pipe, and the fuel cell side coupler is provided on the fuel cell side pipe. The electronic component to be controlled by the control device is disposed on the side of the hydrogen tank and connected to the hydrogen tank side coupler through the electronic component side electric wire. The control device and the fuel cell side coupler are connected through the control device side electric wire.

Thus, the hydrogen tank side coupler and the fuel cell side coupler are connected to communicate the hydrogen tank side pipe and the fuel cell side pipe with each other. This makes the hydrogen tank be ready for supplying hydrogen gas to the fuel cell. Under this condition, the electronic component side electric wire and the control device side electric wire are also connected, so that the electronic component is operable under the control of the control device. Therefore, not only a hydrogen supply pipe connection between the hydrogen tank and the fuel cell, but also an electric wire connection between the electronic component and the control device are achieved with a single connecting process, thereby facilitating the connecting operation. In addition, the electronic component side electric wire and the control device side electric wire never fail to be connected between the electronic component and the control device.

According to a further embodiment, at least one of the pair of couplers, including the hydrogen tank side coupler and the fuel cell side coupler, is provided with a mechanism for closing a hydrogen supply path of the at least one of the pair of couplers by using a resilient member to urge a valve element toward a valve seat, while at least the other one of the pair of couplers, including the hydrogen tank side coupler and the fuel cell side coupler, is provided with a pressing section for communicating a hydrogen supply path of the hydrogen tank side coupler and a hydrogen supply path of the fuel cell side coupler with each other by moving the valve element rearward against an urging force of the resilient member; and an electronic component side terminal, coupled to an end of the electronic component side electric wire, is fixed to a given portion of the hydrogen tank side coupler, while a control device side terminal is fixed to a given portion of the fuel cell side coupler, the control device side terminal being electrically connected to the electronic component side terminal after the hydrogen tank side coupler and the fuel cell side coupler are connected in an airtight manner in a process of connecting the hydrogen tank side coupler and the fuel cell side coupler, and an end of the control device side electric wire is coupled to the control device side terminal.

According to this further embodiment, the electronic component side terminal and the control device side terminal are electrically connected after the hydrogen tank side coupler and the fuel cell side coupler are connected in an airtight manner. Therefore, unless the hydrogen tank side coupler and the fuel cell side coupier are connected in an airtight manner, the electronic component cannot operate. This prevents hydrogen gas, discharged from the hydrogen tank toward the fuel cell, from leaking outside during operation of the electronic component. In this case, a solenoid valve is preferably used as the electronic component for opening or closing the hydrogen tank side pipe. If the hydrogen tank side coupler and the fuel cell side coupler are not connected in an airtight manner, he solenoid valve does not operate. Therefore, the hydrogen gas is prevented from being discharged from the hydrogen tank.

Thus, in this case, a solenoid valve is preferably used as the electronic component. The solenoid valve does not operate unless the hydrogen tank side coupler and the fuel cell side coupler are connected in an airtight manner, so that the hydrogen gas is prevented from being discharged from the hydrogen tank.

Either or both of the pair of couplers, including the hydrogen tank side coupler and the fuel cell side coupler, may be provided with the mechanism for closing the hydrogen supply path by using the resilient member to urge the valve element toward the valve seat. In the hydrogen pipe connecting structure, the point is that when the hydrogen tank side coupler and the fuel cell side coupler are connected, the pressing section may at least press and move the valve element rearward, and simultaneously the hydrogen supply paths of the hydrogen tank side coupler and the fuel cell side coupler may at least be communicated with each other in an airtight manner. The rearward movement of the valve element in the embodiment means that the valve element moves in a direction opposite to the direction in which the resilient member urges the valve element. In case the hydrogen tank side coupler and the fuel cell side coupler are both provided with the valve element and the like, both the valve elements move rearward in opposite directions to each other.

According to a further preferred embodiment, the pressing section is constituted by a tube member for communicating the hydrogen supply path of the hydrogen tank side coupler with the hydrogen supply path of the fuel cell side coupler in an airtight manner; one of the pair of couplers, including the hydrogen tank side coupler and the fuel cell side coupler, is provided with the mechanism for closing the hydrogen supply path of the one of the pair of couplers by using the resilient member to urge the valve element toward the valve seat, while the other one of the pair of couplers, including the hydrogen tank side coupler and the fuel cell side coupler, is provided with the pressing section, and the pressing section moves the valve element rearward against an urging force of the resilient member, thereby communicating the hydrogen supply path of the hydrogen tank side coupler with the hydrogen supply path of the fuel cell side coupler in an airtight manner.

According to this embodiment, the pair of couplers, including the hydrogen tank side coupler and the fuel cell side coupler, is constituted by a coupler provided with the mechanism for closing the hydrogen supply path by using the resilient member to urge the valve element toward the valve seat and a coupler provided with the pressing section for moving the valve element rearward against an urging force of the resilient member to communicate the hydrogen supply paths with each other. This allows a hydrogen supply pipe connection between the hydrogen tank and the fuel cell to be achieved with a single connecting operation, while allowing an electric wire connection between the electronic component and the control device, thereby facilitating the connecting operation.

According to a further preferred embodiment, the pressing section is constituted by a tubular communicating section for communicating the hydrogen supply path of the hydrogen tank side coupler with the hydrogen supply path of the fuel cell side coupler in an airtight manner and a pressing rod that can be inserted into the communicating section; the pair of couplers, including the hydrogen tank side coupler and the fuel cell side coupler, are both provided with the mechanism for closing the hydrogen supply path of each coupler by using the resilient member to urge the valve element toward the valve seat; either one of the pair of couplers is provided with the communicating section and the either one of the pair of couplers is provided with the pressing rod; and the communicating section and the pressing rod move the oppositely facing valve elements rearward against an urging force of each resilient member, thereby communicating the hydrogen supply path of the hydrogen tank side coupler with the hydrogen supply path of the fuel cell side coupler in an airtight manner.

According to this embodiment, the pair of couplers includes the hydrogen tank side coupler and the fuel cell side coupler, in which both the couplers are provided with the mechanism for closing each hydrogen supply path by using the resilient member to urge the valve element toward the valve seat, and either one of the couplers is provided with the communicating section and the pressing rod for moving the valve element rearward against an urging force of the resilient member to communicate the hydrogen supply paths with each other. This allows a hydrogen supply pipe connection between the hydrogen tank and the fuel cell to be achieved with a single connecting operation, while allowing an electric wire connection between the electronic component and the control device, thereby facilitating the connecting operation.

According to a further preferred embodiment, in order to disconnect the hydrogen tank side coupler and the fuel cell side coupler from each other, the electronic component side terminal and the control device side terminal are moved away from each other, and then the hydrogen tank side coupler and the fuel cell side coupler, which nave been connected in manner are disconnected from each other.

In this case, a lock mechanism may be provided for the hydrogen tank side coupler and the fuel cell side coupler for engaging the hydrogen tank side coupler with the fuel cell side coupler by connecting the hydrogen tank side coupler and the fuel cell side coupler in an airtight manner, and then displacing a certain portion of the hydrogen tank side coupler or the fuel cell side coupler. When the lock mechanism is to be locked, the electronic component side terminal and the control device side terminal are connected. According to this mechanism, in order to disengage the hydrogen tank side coupler and the fuel cell side coupler from each other, the electronic component side terminal and the control device side terminal are moved away from each other, and then the hydrogen tank side coupler and the fuel cell side coupler, which have been connected in manner an airtight connection, are disconnected from each other.

According to a further preferred embodiment, when the electronic component and the control device are electrically connected, the connection between the hydrogen tank side coupler and the fuel cell side coupler is determined to be completed. In this case, whether or not the hydrogen tank side coupler and the fuel cell side coupler are connected completely may be determined depending on whether or not the electronic component is operable, or a display device for producing a certain display indicative of an electrical connection between the electronic component and the control device may be provided, thereby to determine that the hydrogen tank side coupler and the fuel cell side coupler are connected completely.

According to a further preferred embodiment, a protruding piece for covering a certain portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electronic component side terminal and the control device side terminal is fixed to an inner surface of the protruding piece, while the other one of the electronic component side terminal and the control device side terminal is fixed to the certain portion of the one of the pair of the couplers.

According to this embodiment, after the hydrogen tank side coupler and the fuel cell side coupler approach each other, and then are connected in an airtight manner, the electronic component side terminal and the control device side terminal are connected such that one of the electronic component side terminal and the control device side terminal covers the other one. Thus, the connection between the hydrogen tank side pipe and the fuel cell side pipe as well as the connection between the electronic component side electric wire and the control device side electric wire are achieved by a simple operation. In this case, after being connected in an airtight manner, the hydrogen tank side coupler and the fuel cell side coupler may be rotated relative to each other in an axial direction, thereby connecting the electronic component side terminal and the control device side terminal. In this case, the one of the pair of couplers, provided with the protruding piece, may be either the hydrogen tank side coupler or the fuel cell side coupler.

According to a further preferred embodiment, an opposed section which faces a distal end portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the control device side terminal and the control device side terminal is fixed to the opposed section, while the other one of the electronic component side terminal and the control device side terminal is fixed to the distal end portion of the one of the pair of the couplers.

According to this embodiment, after the hydrogen tank side coupler and the fuel cell side coupler approach each other, and then are connected in an airtight manner, the electronic component side terminal and the control device side terminal are connected such that these terminals face each other. Thus, the connection between the hydrogen tank side pipe and the fuel cell side pipe as well as the connection between the electronic component side electric wire and the control device side electric wire are achieved by a simple operation. In this case, after being connected in an airtight manner, the hydrogen tank side coupler and the fuel cell side coupler are also rotated relative to each other in an axial direction, thereby connecting the electronic component side terminal and the control device side terminal.

According to a further preferred embodiment, when connecting the hydrogen tank side coupler and the fuel cell side coupler, the electronic component side terminal and the control device side terminal are frictionally contacted with each other, bringing the terminals into electrical connection. Surfaces of the electronic component side terminal and the control device side terminal tend to be subject to oxidation, forming an oxide film thereon. However, according to the embodiment, the electronic component side terminal and the control device side terminal slidingly contact each other when the hydrogen tank side coupler and the fuel cell side coupler are connected to or disconnected from each other. This results in removal of the oxide film. Thereby, the contact between the electronic component side terminal and the control device side terminal is maintained in good condition.

According to a further preferred embodiment, the electronic component is at least one of the solenoid valve for opening or closing the hydrogen tank side pipe, a hydrogen remaining amount detecting sensor for detecting a remaining amount of hydrogen in the hydrogen tank, and a temperature sensor for detecting the temperature of the hydrogen tank.

In the case where the electronic component is the solenoid valve, the hydrogen tank side coupler and the fuel cell side coupler are connected to activate the solenoid valve, thereby discharging hydrogen gas from the hydrogen tank. In the case where the electronic component is the hydrogen remaining amount detecting sensor, a remaining amount meter is preferably provided for displaying a value detected by the hydrogen remaining amount detecting sensor. A driver can look at the remaining amount meter and know the remaining amount of hydrogen gas, as needed. Also, an indication on the remaining amount meter allows the driver to recognize that the hydrogen tank side coupler and the fuel cell side coupler have been connected in an airtight manner. Further, in the case where the electronic component is the temperature sensor, the driver can know the condition of hydrogen gas in the hydrogen tank based on the temperature detected by the temperature sensor. In this case, the temperature sensor indicates a detected temperature, which allows the driver to recognize that the hydrogen tank side coupler and the fuel cell side coupler have been connected in an airtight manner.

According to a preferred embodiment, the system having the fuel cell is a motorcycle. According to this embodiment, the motorcycle, having a pair of hydrogen supply pipes for connecting the fuel cell and the hydrogen tank having an electronic component mounted nearby, achieves easy attachment/detachment of the pair of the hydrogen supply pipes.

The description above in particular provides an embodiment of a hydrogen supply pipe connecting structure to facilitate attachment/detachment of a hydrogen supply pipe for connecting a fuel cell and a hydrogen tank having an electronic component mounted nearby. According to this particular embodiment, there is provided a hydrogen supply pipe for a system having a fuel cell 25 for generating electric power by reacting hydrogen gas with oxygen gas is constituted by gas pipes 31 a and 31 b to provide a male coupler 32b on the gas pipe 31 a and to provide a female coupler 32a on the gas pipe 31 b; A solenoid valve 41 a is disposed on a hydrogen tank 31 to connect the solenoid valve 41 a to the male coupler 32b through an electric wire 54a and to connect a power source system control device 50 to the female coupler 32a through an electric wire 54b; The solenoid valve 41 a and the power source system control device 50 are electrically connected to or disconnected from each other in accordance with attachment/detachment of the female coupler 32a and the male coupler 32b; In addition, the solenoid valve 41 a and the power source system control device 50 are connected to each other after the female coupler 32a and the male coupler 32b are connected in an airtight manner.

The present description further discloses, according to a first preferred aspect, a hydrogen supply pipe connecting structure for a system having a fuel cell for generating electric power by reacting hydrogen gas in the air, which is supplied from a hydrogen tank through a hydrogen supply pipe, with oxygen gas, which is supplied from an air supply device through an air supply pipe, wherein the hydrogen supply pipe is constituted by a hydrogen tank side pipe and a fuel cell side pipe to provide a hydrogen tank side coupler on a distal end portion of the hydrogen tank side pipe and to provide a fuel cell side coupler, detachably connected to the hydrogen tank side coupler, on a distal end portion of the fuel cell side pipe; an electronic component is disposed on the hydrogen tank side pipe or the hydrogen tank to connect the electronic component to the hydrogen tank side coupler through an electronic component side electric wire and to connect a control device for controlling the electronic component to the fuel cell side coupler through a control device side electric wire; and the electronic component and the control device are electrically connected to or disconnected from each other in accordance with attachment/detachment of a pair of couplers including the hydrogen tank side coupler and the fuel cell side coupler.

Further, according to a second preferred aspect, at least one of the pair of couplers, including the hydrogen tank side coupler and the fuel cell side coupler, is provided with a mechanism for closing a hydrogen supply path of the at least one of the pair of couplers by using a resilient member to urge a valve element toward a valve seat, while at least the other one of the pair of couplers, including the hydrogen tank side coupler and the fuel cell side coupler, is provided with a pressing section for communicating the hydrogen supply path of the hydrogen tank side coupler and the hydrogen supply path of the fuel cell side coupler with each other by moving the valve element rearward against an urging force of the resilient member; and an electronic component side terminal, coupled to an end of the electronic component side electric wire, is fixed to a given portion of the hydrogen tank side coupler, while a control device side terminal is fixed to a given portion of the fuel cell side coupler, the control device side terminal being electrically connected to the electronic component side terminal after the hydrogen tank side coupler and the fuel cell side coupler are connected in an airtight manner in a process of connecting the hydrogen tank side coupler and the fuel cell side coupler, and an end of the control device side electric wire is coupled to the control device side terminal.

Further, according to a third preferred aspect, the pressing section is constituted by a tube member for communicating the hydrogen supply path of the hydrogen tank side coupler with the hydrogen supply path of the fuel cell side coupler in an airtight manner; one of the pair of couplers, including the hydrogen tank side coupler and the fuel cell side coupler, is provided with the mechanism for closing the hydrogen supply path of the one of the pair of couplers by using the resilient member to urge the valve element toward the valve seat, while the other one of the pair of couplers, including the hydrogen tank side coupler and the fuel cell side coupler, is provided with the pressing section; and the pressing section moves the valve element rearward against an urging force of the resilient member, thereby communicating the hydrogen supply path of the hydrogen tank side coupler with the hydrogen supply path of the fuel cell side coupler in an airtight manner.

Further, according to a fourth preferred aspect, the pressing section is constituted by a tubular communicating section for communicating the hydrogen supply path of the hydrogen tank side coupler with the hydrogen supply path of the fuel cell side coupler in an airtight manner and a pressing rod that can be inserted into the communicating section; the pair of couplers, including the hydrogen tank side coupler and the fuel cell side coupler, are both provided with the mechanism for closing the hydrogen supply path of each coupler by using the resilient member to urge the valve element toward the valve seat; either one of the pair of couplers is provided with the communicating section and the either one of the pair of couplers is provided with the pressing rod; and the communicating section and the pressing rod move the oppositely facing valve elements rearward against an urging force of each resilient member, thereby communicating the hydrogen supply path of the hydrogen tank side coupler with the hydrogen supply path of the fuel cell side coupler in an airtight manner.

Further, according to a fifth preferred aspect, in order to disconnect the hydrogen tank side coupler and the fuel cell side coupler from each other, the electronic component side terminal and the control device side terminal are moved away from each other, and then the hydrogen tank side coupler and the fuel cell side coupler, which have been connected in an airtight manner, are disconnected from each other.

Further, according to a sixth preferred aspect, when the electronic component and the control device are electrically connected, the connection between the hydrogen tank side coupler and the fuel cell side coupler the determined to be completed.

Further, according to a seventh preferred aspect, a protruding piece for covering a certain portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electronic component side terminal and the control device side terminal is fixed to an inner surface of the protruding piece, while the other one of the electronic component side terminal and the control device side terminal is fixed to the certain portion of the one of the pair of the couplers.

Further, according to an eighth preferred aspect, an opposed section which faces a distal end portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electronic component side terminal and the control device side terminal is fixed to the opposed section, while the other one of the electronic component side terminal and the control device side terminal is fixed to the distal end portion of the one of the pair of the couplers.

Further, according to a ninth preferred aspect, when connecting the hydrogen tank side coupler and the fuel cell side coupler, the electronic component side terminal and the control device side terminal are frictionally contacted with each other, bringing the terminals into electrical connection.

Further, according to a tenth preferred aspect, the electronic component is at least one of a solenoid valve for opening or closing the hydrogen tank side pipe, a hydrogen remaining amount detecting sensor for detecting a remaining amount of hydrogen in the hydrogen tank, and a temperature sensor for detecting the temperature of the hydrogen tank.

Further, according to an eleventh preferred aspect, the system having the fuel cell is a motorcycle.

## Claims

1. Fuel cell system having
a fuel cell (25) for generating electric power by reacting hydrogen gas with oxygen gas,
said hydrogen gas being supplied from a hydrogen tank (31) through a hydrogen supply pipe,
said hydrogen supply pipe being constituted by a hydrogen tank side pipe (31 a) and a fuel cell side pipe (31 b),
said pipes (31 a,31 b) being connected by a coupler mechanism (32),
said coupler mechanism (32) being constituted by a hydrogen tank side coupler (32b) and fuel cell side coupler (32a), being detachably connected with each other,
wherein an electric or electronic component (41a,41b,41c) is disposed on the hydrogen tank side and a control device (50) is provided on the fuel cell side,
and wherein the control device (50) and the electric or electronic component (41a,41b,41c) are connected to each other by connecting the coupler (32a,32b) with each other.

2. Fuel supply device according to claim 1, wherein the electric or electronic component (41a,41b,41c) and the control device (50) are electrically connected to or disconnected from each other in accordance with attachment/detachment of the pair of couplers (32a,32b) including the hydrogen tank side coupler and the fuel cell side coupler.

3. Fuel cell system according to claim 1 or 2, further comprising a first electric connection (56a) for connecting the electric or electronic component (41a,41b,41c) to the hydrogen tank side coupler (32b), said electric or electronic component being disposed on the hydrogen tank side pipe (31 a) and/or the hydrogen tank (31).

4. Fuel cell system according to one of the claims 1 to 3, further comprising a second electric connection (56b) for connecting the control device (50) with the fuel cell side coupler (32a).

5. Fuel cell system according to claim 3 or 4, wherein the electric or electronic component (41a,41b,41c) disposed on the hydrogen tank side pipe (31 a) or the hydrogen tank (31) is connected to the hydrogen tank side coupler (32b) through an electric or electronic component side electric wire (56a) and the control device (50) for controlling the electric or electronic component (41a,41b,41c) is connected to the fuel cell side coupler (32a) through a control device side electric wire (56b).

6. Fuel cell system according to one of the claims 1 to 5, wherein at least one of the pair of couplers (32a,32b), including the hydrogen tank side coupler and the fuel cell side coupler, is provided with a mechanism (34,74,85) for closing a hydrogen supply path (a,b) of the at least one of the pair of couplers (32a,32b) by using a resilient member (34b,34d,85b) to urge a valve element (34a,85a) toward a valve seat.

7. Fuel cell system according to claim 6, wherein at least the other one of the pair of couplers (32a,32b), including the hydrogen tank side coupler and the fuel cell side coupler, is provided with a pressing section (39a,86 and 89) for communicating the hydrogen supply path of the hydrogen tank side coupler and the hydrogen supply path of the fuel cell side coupler with each other by moving the valve element rearward against an urging force of the resilient member.

8. Fuel cell system according to claim 6 or 7, wherein an electric or electronic component side terminal, coupled to an end of the electric or electronic component side electric wire, is fixed to a given portion of the hydrogen tank side coupler, while a control device side terminal is fixed to a given portion of the fuel cell side coupler, the control device side terminal being electrically connected to the electric or electronic component side terminal after the hydrogen tank side coupler and the fuel cell side coupler are connected in an airtight manner in a process of connecting the hydrogen tank side coupler and the fuel cell side coupler, and an end of the control device side electric wire is coupled to the control device side terminal.

9. Fuel cell system according to claim 7 or 8, wherein the pressing section is constituted by a tube member for communicating the hydrogen supply path of the hydrogen tank side coupler with the hydrogen supply path of the fuel cell side coupler in an airtight manner; one of the pair of couplers, including the hydrogen tank side coupler and the fuel cell side coupler, is provided with the mechanism for closing the hydrogen supply path of the one of the pair of couplers by using the resilient member to urge the valve element toward the valve seat, while the other one of the pair of couplers, including the hydrogen tank side coupler and the fuel cell side coupler, is provided with the pressing section; and the pressing section moves the valve element rearward against an urging force of the resilient member, thereby communicating the hydrogen supply path of the hydrogen tank side coupler with the hydrogen supply path of the fuel cell side coupler in an airtight manner.

10. Fuel cell system according to claim 7 or 8, wherein the pressing section is constituted by a tubular communicating section for communicating the hydrogen supply path of the hydrogen tank side coupler with the hydrogen supply path of the fuel cell side coupler in an airtight manner and a pressing rod that can be inserted into the communicating section; the pair of couplers, including the hydrogen tank side coupler and the fuel cell side coupler, are both provided with the mechanism for closing the hydrogen supply path of each coupler by using the resilient member to urge the valve element toward the valve seat; either one of the pair of couplers is provided with the communicating section and the either one of the pair of couplers is provided with the pressing rod; and the communicating section and the pressing rod move the oppositely facing valve elements rearward against an urging force of each resilient member, thereby communicating the hydrogen supply path of the hydrogen tank side coupler with the hydrogen supply path of the fuel cell side coupler in an airtight manner.

11. Fuel cell system according to one of the claims 6 to 10, wherein in order to disconnect the hydrogen tank side coupler and the fuel cell side coupler from each other, the electric or electronic component side terminal and the control device side terminal are moved away from each other, and then the hydrogen tank side coupler and the fuel cell side coupler, which have been connected in an airtight manner, are disconnected from each other.

12. Fuel cell system according to one of the claims 6 to 11, wherein when the electric or electronic component and the control device are electrically connected, the connection between the hydrogen tank side coupler and the fuel cell side coupler the determined to be completed.

13. Fuel cell system according to one of the claims 6 to 12, wherein a protruding piece for covering a certain portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electric or electronic component side terminal and the control device side terminal is fixed to an inner surface of the protruding piece, while the other one of the electric or electronic component side terminal and the control device side terminal is fixed to the certain portion of the one of the pair of the couplers.

14. Fuel cell system according to one of the claims 6 to 13, wherein an opposed section which faces a distal end portion of one of the pair of couplers, including the hydrogen tank side coupler and the fuel cell side coupler, when the hydrogen tank side coupler and the fuel cell side coupler are connected in an airtight manner, is provided for the other one of the pair of couplers, including the hydrogen tank side coupler and the fuel cell side coupler, and one of the electric or electronic component side terminal and the control device side terminal is fixed to the opposed section, while the other one of the electric or electronic component side terminal and the control device side terminal is fixed to the distal end portion of the one of the pair of the couplers.

15. Fuel cell system according to claim 13 or 14, wherein when connecting the hydrogen tank side coupler and the fuel cell side coupler, the electric or electronic component side terminal and the control device side terminal are frictionally contacted with each other, bringing the terminals into electrical connection.

16. Fuel cell system according to one of the claims 1 to 15, wherein the electric or electronic component is at least one of a solenoid valve for opening or closing the hydrogen tank side pipe, a hydrogen remaining amount detecting sensor for detecting a remaining amount of hydrogen in the hydrogen tank, and a temperature sensor for detecting the temperature of the hydrogen tank.

17. Fuel cell system according to one of the claims 1 to 16, wherein the system having the fuel cell is a motorcycle.
